# EUROPEAN PATENT APPLICATION

(11) **EP 3 584 756 A1**
(43) Date of publication of application: **25.12.2019**
(21) Application number: 17900786.9
(22) Date of filing: 15.03.2017
(51) Int. Cl.: G06Q 30/02, H04L 12/26

(54) **ADVERTISEMENT MONITORING METHOD, DEVICE AND SYSTEM**

(71) Applicant: Huawei Technologies Co., Ltd., Longgang District Shenzhen, Guangdong 518129 (CN)
(72) Inventor: PANG, Huangang, Shenzhen, Guangdong 518129 (CN); HU, Yingbo, Shenzhen, Guangdong 518129 (CN); LI, Tiange, Shenzhen, Guangdong 518129 (CN); LI, Yang, Shenzhen, Guangdong 518129 (CN)
(74) Representative: Goddar, Heinz J.
(86) International application number: PCT/CN2017/076719
(87) International publication number: WO 2018/165886

(57) **Abstract**

Embodiments of this application provide an advertising monitoring method, an apparatus, and a system. The advertising monitoring method includes: sending an advertising request to an advertising platform server, receiving an advertising response returned by the advertising platform server, where the advertising response includes a monitoring URL, and the monitoring URL is generated after the advertising platform server replaces a macro parameter in an original monitoring URL based on a parameter replacement rule of an advertising monitoring platform and at least one of application information, network information, and device information; monitoring whether a to-be-monitored advertising event occurs; and if the advertising event occurs, sending a first notification message to the advertisement service server, and sending a second notification message to the advertising monitoring platform by calling the monitoring URL. The advertising monitoring method provided in the embodiments of this application improves adaptability of an advertising monitoring system.

## Description

### TECHNICAL FIELD

Embodiments of this application relate to the field of communications technologies, and in particular, to an advertising monitoring method, an apparatus, and a system.

### BACKGROUND

Currently, smart handheld devices have become quite popular, and a variety of mobile application clients running on the smart handheld devices attract advertisers to push advertisements onto the mobile applications. To learn of advertising effectiveness in a timely manner, and ensure objectivity and fairness of the advertising effectiveness, when pushing an advertisement onto an advertising platform, an advertiser usually entrusts a relatively independent third-party advertising monitoring platform with advertising metrics monitoring, so as to compare a monitoring result with push data provided by the advertising platform. In this way, the advertising effectiveness is obtained. To monitor the advertising metrics, the third-party advertising monitoring platform requires a client to report related information based on a requirement of the third-party advertising monitoring platform, so as to collect statistics.

At present, an advertising monitoring method is as follows: An advertiser obtains a monitoring uniform resource locator (Uniform Resource Locator, URL) from a third-party monitoring platform, and the monitoring URL includes a macro parameter that needs to be replaced by a client before reporting. The advertiser logs in to an advertising platform, creates an advertisement push task, and fills the monitoring URL in the advertisement push task. The advertising platform sends the monitoring URL to the client. When an advertising event occurs on the client, the client replaces, as required by the third-party monitoring platform, the macro parameter that needs to be replaced in the monitoring URL, and reports the monitoring URL to both the advertising platform and the third-party monitoring platform.

However, in the prior-art advertising monitoring method, an entire advertising system needs to run in a fixed manner, and especially, the third-party advertising monitoring platform and the monitoring URL cannot be changed. When the third-party advertising monitoring platform or the monitoring URL changes, an error may occur when the client replaces the macro parameter in the monitoring URL. Consequently, the advertising monitoring system cannot run properly. The prior-art advertising monitoring system cannot perform adjustment flexibly and has poor adaptability.

### SUMMARY

Embodiments of this application provide an advertising monitoring method, an apparatus, and a system, to improve adaptability of an advertising monitoring system when an advertising monitoring platform or a monitoring URL changes.

According to a first aspect, an embodiment of this application provides an advertising monitoring method, where the method includes: sending an advertising request to an advertising platform server, where the advertising request includes an advertisement position identifier, application information, network information, and device information; receiving an advertising response returned by the advertising platform server, where the advertising response includes a monitoring URL; monitoring whether a to-be-monitored advertising event occurs; and if the advertising event occurs, sending a first notification message to the advertisement service server, and sending a second notification message to an advertising monitoring platform by calling the monitoring URL.

According to the advertising monitoring method provided in the first aspect, a terminal does not need to perform parameter replacement; instead, the advertising platform server replaces a macro parameter in an original monitoring URL based on a parameter replacement rule of the advertising monitoring platform and the information reported by the terminal. In this case, when the original monitoring URL changes, or when the original monitoring URL changes because of a change of the monitoring platform, an error possibly caused by parameter replacement by the terminal is prevented, and adaptability of an advertising monitoring system is improved.

Optionally, in a possible implementation of the first aspect, the advertising response may further include an advertisement matching the advertisement position identifier, the application information, the network information, and the device information.

According to the advertising monitoring method provided in this possible implementation, the terminal can receive, by using the advertising response, the advertisement sent by the advertising platform server, improving advertisement push efficiency.

Optionally, in a possible implementation of the first aspect, the device information includes at least one of the following: an IMEI, an operating system identifier, a terminal model, an IP address, and a MAC address.

According to a second aspect, an embodiment of this application provides an advertising monitoring method, where the method includes: receiving an advertising request sent by a terminal, where the advertising request includes an advertisement position identifier, application information, network information, and device information; determining a matched advertisement based on the advertisement position identifier, the application information, the network information, and the device information; obtaining an original monitoring URL corresponding to the advertisement, and a parameter replacement rule of an advertising monitoring platform corresponding to the original monitoring URL; replacing a macro parameter in the original monitoring URL based on the parameter replacement rule and at least one of the application information, the network information, and the device information, to generate a monitoring URL; generating an advertising response, where the advertising response includes the monitoring URL; and sending the advertising response to the terminal.

According to the advertising monitoring method provided in the second aspect, the advertising platform server replaces the macro parameter in the original monitoring URL based on the parameter replacement rule of the advertising monitoring platform and the information reported by the terminal, and the terminal does not need to perform parameter replacement. When the original monitoring URL changes, or when the original monitoring URL changes because of a change of the monitoring platform, an error possibly caused by parameter replacement by the terminal is prevented, and adaptability of an advertising monitoring system is improved.

Optionally, in a possible implementation of the second aspect, the parameter replacement rule includes a parameter name and a parameter encryption manner, and the replacing a macro parameter in the original monitoring URL based on the parameter replacement rule and the device information, to generate a monitoring URL includes: determining the to-be-replaced macro parameter in the original monitoring URL based on the parameter name and a macro parameter in the original monitoring URL; converting, based on the parameter encryption manner, at least one of the application information, the network information, and the device information into a result parameter matching the parameter encryption manner; replacing the to-be-replaced macro parameter in the original monitoring URL with a result parameter corresponding to the to-be-replaced macro parameter; and using the original monitoring URL after replacement as the monitoring URL.

The advertising monitoring method provided in this possible implementation provides a specific implementation of generating the monitoring URL.

Optionally, in a possible implementation of the second aspect, if the parameter replacement rule further includes a monitoring domain name, before the determining the to-be-replaced macro parameter in the original monitoring URL based on the parameter name and a macro parameter in the original monitoring URL, the method further includes: determining whether the monitoring domain name in the parameter replacement rule includes a monitoring domain name in the original monitoring URL.

Optionally, in a possible implementation of the second aspect, the advertising response further includes the advertisement.

According to the advertising monitoring method provided in this possible implementation, the advertising platform server can send the matched advertisement to the terminal by using the advertising response, improving advertisement push efficiency.

Optionally, in a possible implementation of the second aspect, the method further includes: receiving a first notification message sent by the terminal.

Optionally, in a possible implementation of the second aspect, the device information includes at least one of the following: an IMEI, an operating system identifier, a terminal model, an IP address, and a MAC address.

Optionally, in a possible implementation of the second aspect, before the receiving an advertising request sent by a terminal, the method further includes: obtaining a parameter replacement rule of each advertising monitoring platform; and storing the parameter replacement rule of each advertising monitoring platform in a configuration file.

According to the advertising monitoring method provided in this possible implementation, when an advertising platform needs to cooperate with a new monitoring platform, the advertising platform may obtain a parameter replacement rule of the new monitoring platform in advance, and store the new parameter replacement rule in the configuration file. If the parameter that the current monitoring platform in cooperation requires to report changes, the advertising platform may also obtain a changed parameter replacement rule of the current monitoring platform in cooperation in advance, and store the changed parameter replacement rule in the configuration file. When macro parameter replacement is required, the parameter replacement rule of the advertising monitoring platform can be obtained directly from the configuration file, improving macro parameter replacement efficiency.

According to a third aspect, an embodiment of this application provides a terminal, where the terminal may include a transceiver module and a monitoring module. The transceiver module is configured to: send an advertising request to an advertising platform server, where the advertising request includes an advertisement position identifier, application information, network information, and device information; and receive an advertising response returned by the advertising platform server, where the advertising response includes a monitoring URL. The monitoring module is configured to monitor whether a to-be-monitored advertising event occurs. The transceiver module is further configured to: when the monitoring module determines that the advertising event occurs, send a first notification message to the advertisement service server, and send a second notification message to the advertising monitoring platform by calling the monitoring URL.

Optionally, in a possible implementation of the third aspect, the advertising response further includes an advertisement matching the advertisement position identifier, the application information, the network information, and the device information.

Optionally, in a possible implementation of the third aspect, the device information includes at least one of the following: an IMEI, an operating system identifier, a terminal model, an IP address, and a MAC address.

According to a fourth aspect, an embodiment of this application provides an advertising platform server, where the advertising platform server includes a transceiver module, an advertisement selection module, a replacing module, and an advertising response processing module. The transceiver module is configured to receive an advertising request sent by a terminal, where the advertising request includes an advertisement position identifier, application information, network information, and device information. The advertisement selection module is configured to determine a matched advertisement based on the advertisement position identifier, the application information, the network information, and the device information. The replacing module is configured to: obtain an original monitoring URL corresponding to the advertisement, and a parameter replacement rule of an advertising monitoring platform corresponding to the original monitoring URL; and replace a macro parameter in the original monitoring URL based on the parameter replacement rule and at least one of the application information, the network information, and the device information, to generate a monitoring URL. The advertising response processing module is configured to generate an advertising response, where the advertising response includes the monitoring URL. The transceiver module is further configured to send the advertising response to the terminal.

Optionally, in a possible implementation of the fourth aspect, the parameter replacement rule includes a parameter name and a parameter encryption manner, and the replacing module is specifically configured to: determine the to-be-replaced macro parameter in the original monitoring URL based on the parameter name and a macro parameter in the original monitoring URL; convert, based on the parameter encryption manner, at least one of the application information, the network information, and the device information into a result parameter matching the parameter encryption manner; replace the to-be-replaced macro parameter in the original monitoring URL with a result parameter corresponding to the to-be-replaced macro parameter; and use the original monitoring URL after replacement as the monitoring URL.

Optionally, in a possible implementation of the fourth aspect, the parameter replacement rule further includes a monitoring domain name, and the replacing module is further configured to determine whether the monitoring domain name in the parameter replacement rule includes a monitoring domain name in the original monitoring URL.

Optionally, in a possible implementation of the fourth aspect, the advertising response further includes the advertisement.

Optionally, in a possible implementation of the fourth aspect, the transceiver module is further configured to receive a first notification message sent by the terminal.

Optionally, in a possible implementation of the fourth aspect, the device information includes at least one of the following: an IMEI, an operating system identifier, a terminal model, an IP address, and a MAC address.

Optionally, in a possible implementation of the fourth aspect, the replacing module is further configured to: obtain a parameter replacement rule of each advertising monitoring platform; and store the parameter replacement rule of each advertising monitoring platform in a configuration file.

According to a fifth aspect, an embodiment of this application provides a terminal, where the terminal includes a transceiver and a processor. The transceiver is configured to: send an advertising request to an advertising platform server, where the advertising request includes an advertisement position identifier, application information, network information, and device information; and receive an advertising response returned by the advertising platform server, where the advertising response includes a monitoring URL. The processor is configured to monitor whether a to-be-monitored advertising event occurs. The transceiver is further configured to: when the processor determines that the advertising event occurs, send a first notification message to the advertisement service server, and send a second notification message to the advertising monitoring platform by calling the monitoring URL.

Optionally, in a possible implementation of the fifth aspect, the advertising response further includes an advertisement matching the advertisement position identifier, the application information, the network information, and the device information.

Optionally, in a possible implementation of the fifth aspect, the device information includes at least one of the following: an IMEI, an operating system identifier, a terminal model, an IP address, and a MAC address.

According to a sixth aspect, an embodiment of this application provides an advertising platform server, where the advertising platform server includes a transceiver and a processor. The transceiver is configured to receive an advertising request sent by a terminal, where the advertising request includes an advertisement position identifier, application information, network information, and device information. The processor is configured to: determine a matched advertisement based on the advertisement position identifier, the application information, the network information, and the device information; obtain an original monitoring URL corresponding to the advertisement, and a parameter replacement rule of an advertising monitoring platform corresponding to the original monitoring URL; replace a macro parameter in the original monitoring URL based on the parameter replacement rule and at least one of the application information, the network information, and the device information, to generate a monitoring URL; and generate an advertising response, where the advertising response includes the monitoring URL. The transceiver is further configured to send the advertising response to the terminal.

Optionally, in a possible implementation of the sixth aspect, the parameter replacement rule includes a parameter name and a parameter encryption manner, and the processor is specifically configured to: determine the to-be-replaced macro parameter in the original monitoring URL based on the parameter name and a macro parameter in the original monitoring URL; convert, based on the parameter encryption manner, at least one of the application information, the network information, and the device information into a result parameter matching the parameter encryption manner; replace the to-be-replaced macro parameter in the original monitoring URL with a result parameter corresponding to the to-be-replaced macro parameter; and use the original monitoring URL after replacement as the monitoring URL.

Optionally, in a possible implementation of the sixth aspect, the parameter replacement rule further includes a monitoring domain name, and the processor is further configured to determine whether the monitoring domain name in the parameter replacement rule includes a monitoring domain name in the original monitoring URL.

Optionally, in a possible implementation of the sixth aspect, the advertising response further includes the advertisement.

Optionally, in a possible implementation of the sixth aspect, the transceiver is further configured to receive a first notification message sent by the terminal.

Optionally, in a possible implementation of the sixth aspect, the device information includes at least one of the following: an IMEI, an operating system identifier, a terminal model, an IP address, and a MAC address.

Optionally, in a possible implementation of the sixth aspect, the processor is further configured to: obtain a parameter replacement rule of each advertising monitoring platform; and store the parameter replacement rule of each advertising monitoring platform in a configuration file.

According to a seventh aspect, an embodiment of this application provides an advertising monitoring system, where the advertising monitoring system includes an advertising monitoring platform, the terminal provided in the third aspect and the possible implementations of the third aspect, and the advertising platform server provided in the fifth aspect and the possible implementations of the fifth aspect.

According to an eighth aspect, an embodiment of this application provides an advertising monitoring system, where the advertising monitoring system includes an advertising monitoring platform, the terminal provided in the fourth aspect and the possible implementations of the fourth aspect, and the advertising platform server provided in the sixth aspect and the possible implementations of the sixth aspect.

With reference to the first aspect and the possible implementations of the first aspect, the second aspect and the possible implementations of the second aspect, the third aspect and the possible implementations of the third aspect, the fourth aspect and the possible implementations of the fourth aspect, the fifth aspect and the possible implementations of the fifth aspect, the sixth aspect and the possible implementations of the sixth aspect, the seventh aspect and the possible implementations of the seventh aspect, and the eighth aspect and the possible implementations of the eighth aspect, the monitoring URL is generated after the macro parameter in the original monitoring URL is replaced by the advertising platform server based on the parameter replacement rule of the advertising monitoring platform and at least one of the application information, the network information, and the device information; the original monitoring URL is obtained by an advertiser from the advertising monitoring platform; the first notification message is used to report the advertising event to the advertisement service server; and the second notification message is used to report the advertising event to the advertising monitoring platform.

According to a ninth aspect, an embodiment of this application provides a program. When executed by a processor, the program is used to execute the method in the first aspect.

According to a tenth aspect, an embodiment of this application provides a program product, for example, a computer readable storage medium, including the program in the ninth aspect.

According to an eleventh aspect, an embodiment of this application provides a computer readable storage medium. The computer readable storage medium stores an instruction, and when the instruction runs on a computer, the computer performs the method in the first aspect.

According to a twelfth aspect, an embodiment of this application provides a program. When executed by a processor, the program is used to execute the method in the second aspect.

According to a thirteenth aspect, an embodiment of this application provides a program product, for example, a computer readable storage medium, including the program in the twelfth aspect.

According to a fourteenth aspect, an embodiment of this application provides a computer readable storage medium. The computer readable storage medium stores an instruction, and when the instruction runs on a computer, the computer performs the method in the second aspect.

The embodiments of this application provide the advertising monitoring method, the apparatus, and the system. According to the advertising monitoring method provided in the embodiments of this application, the terminal does not need to replace the macro parameter in the original monitoring URL; instead, the advertising platform server performs macro parameter replacement. When the advertising monitoring platform or the original monitoring URL changes, the error possibly caused by parameter replacement by the terminal is prevented, and adaptability of the advertising monitoring system is improved.

### BRIEF DESCRIPTION OF DRAWINGS

FIG. 1 is a diagram of a system architecture of an advertising monitoring system applicable to an embodiment of this application;
FIG. 2 is a message exchange diagram of a prior-art advertising monitoring method;
FIG. 3 is a message exchange diagram of an embodiment of an advertising monitoring method according to an embodiment of this application;
FIG. 4 is a flowchart of another embodiment of an advertising monitoring method according to an embodiment of this application;
FIG. 5 is a schematic structural diagram of a terminal according to an embodiment of this application;
FIG. 6 is a schematic structural diagram of another structure of a terminal according to an embodiment of this application;
FIG. 7 is a schematic structural diagram of an advertising platform server according to an embodiment of this application;
FIG. 8 is a schematic structural diagram of another structure of an advertising platform server according to an embodiment of this application; and
FIG. 9 is a schematic structural diagram of an advertising monitoring system according to an embodiment of this application.

### DESCRIPTION OF EMBODIMENTS

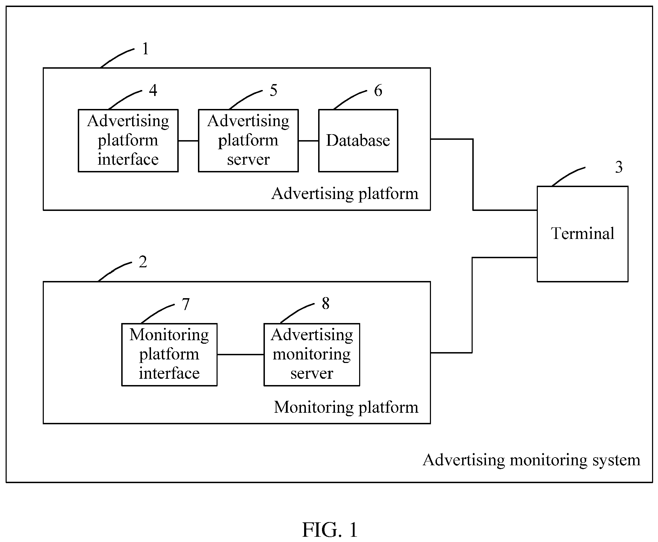

FIG. 1 is a diagram of a system architecture of an advertising monitoring system applicable to an embodiment of this application. The system architecture of the advertising monitoring system is also applicable to the prior art. As shown in FIG. 1, the advertising monitoring system may include an advertising platform 1, a monitoring platform 2, and a terminal 3.

The advertising platform 1 may include an advertising platform interface 4, an advertising platform server 5 (also referred to as a push server of the advertising platform), and a database 6. The advertising platform interface 4 may be an interface between the advertising platform 1 and a connected device, and the connected device may be any device with a data processing function. An advertiser (or an advertising agent or an advertising agency) may log in to the advertising platform 1 by using the connected device, and create an advertisement push task on the advertising platform 1. The advertising platform server 5 is configured to exchange an advertisement message with the connected device. The database 6 is configured to store data.

The monitoring platform 2 may include a monitoring platform interface 7 and an advertising monitoring server 8 (also referred to as an event reporting server of the monitoring platform). The monitoring platform interface 7 may be an interface between the monitoring platform 2 and a connected device, and the connected device may be any device with a data processing function. The advertiser may log in to the monitoring platform 2 by using the connected device, and obtain a monitoring URL from the monitoring platform 2. The advertising monitoring server 8 is configured to exchange an advertisement message with the connected device.

The terminal 3 may be configured to: display an advertisement to a user, and exchange an advertisement message with the advertising platform server 5 and the advertising monitoring server 8.

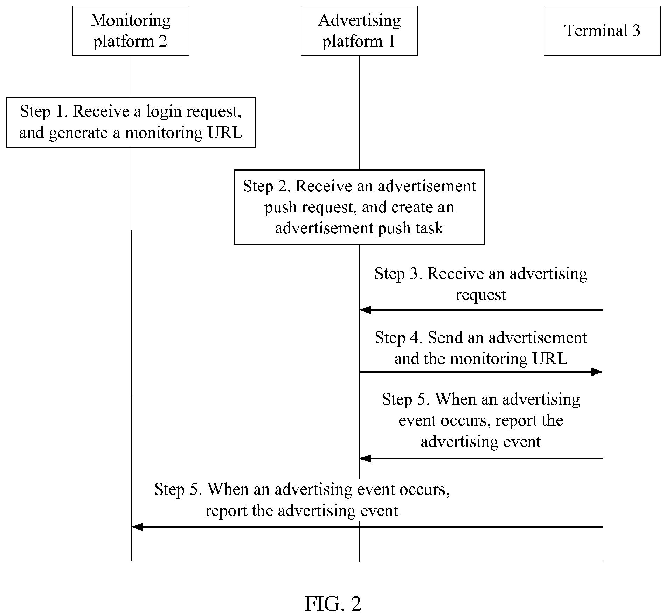

Based on the architecture of the advertising monitoring system shown in FIG. 1, FIG. 2 is a message exchange diagram of a prior-art advertising monitoring method. As shown in FIG. 2, the prior-art advertising monitoring method may include the following steps.

Step 1. The monitoring platform 2 receives a login request, and generates a monitoring URL.

The login request may be sent by an advertiser by using a connected device. The monitoring URL is corresponding to the monitoring platform 2 and a to-be-monitored advertising event, and the to-be-monitored advertising event is corresponding to an advertisement pushed by the advertiser onto the advertising platform 1. Therefore, different monitoring platforms, different pushed advertisements, or different advertising events are corresponding to different monitoring URLs. Correspondingly, the advertiser may obtain, from the monitoring platform 2, monitoring URLs corresponding to different advertising events. The advertising events may include advertisement exposure, advertisement click, and the like. Displaying an advertisement once means one advertisement exposure. Clicking an advertisement once by a user by using the terminal 3 means one advertisement click.

The monitoring URL includes a dynamically replaceable macro parameter that the monitoring platform 2 requires the terminal 3 to report. A quantity of parameters, a parameter name, whether to encrypt a parameter value, an encryption manner, and the like that are required to be reported may vary depending on a monitoring platform.

The following describes the monitoring URL in detail by using specific examples.

For example, an exposure event monitoring URL obtained by an advertiser A from a monitoring platform B is as follows:
http://g.amonitor.com/index?k=1234&p=5679&mo=_OS_&ns=_IP_&m1=_ ANDROIDID1_&m1a=_ANDROIDID_&m2=_IMEI_&m4=_AAID_&m6=_MAC 1_&m6a=_MAC_&nn=_APP_

A domain name in the exposure monitoring URL of the monitoring platform B is http://g.amonitor.com. An advertising task of the advertiser A is identified by index?k=1234&p=5679. The monitoring platform B requires that the following nine macro parameters be reported: _OS_, _IP_, _IMEI_, _AAID_, _MAC1_, _MAC_, _APP_, _ANDROIDID1_, and _ANDROIDID_. The underlined macros need to be replaced before reporting.

For another example, a click event monitoring URL obtained by the advertiser A from the monitoring platform B is as follows:
http://e.amonitor.com/index?k=1234&p=5679&mo=_OS_&ns=_IP_&m1=_ ANDROIDIDl_&mla=_ANDROIDID_&m2=_IMEI_&m4=_AAID_&m6=_MAC 1_&m6a=_MAC_&nn=_APP_

A domain name in the click monitoring URL of the monitoring platform B is http://e.amonitor.com. The advertising task of the advertiser A is identified by index?k=1234&p=5679. The monitoring platform B requires that the following nine macro parameters be reported: _OS_, _IP_, _IMEI_, _AAID_, _MAC1_, _MAC_, _APP_, _ANDROIDID1_, and _ANDROIDID_. The underlined macros need to be replaced before reporting.

For still another example, an exposure event monitoring URL obtained by an advertiser C from a monitoring platform D is as follows:
http://v.bmonitor.com/a50231,b03753846,c523,0a_OS_,0c_IMEI_,0d_Andr oidID_,n_MAC_,f_IP_,r_TERM_

A domain name in the exposure monitoring URL of the monitoring platform D is http://v.bmonitor.com. An advertising task of the advertiser C is identified by a50231,b03753846,c523. The monitoring platform D requires that the following six macro parameters be reported: _OS_, _IMEI_, _AndroidID_, _MAC_, _IP_, and _TERM_. The underlined macros need to be replaced before reporting.

For yet another example, a click event monitoring URL obtained by the advertiser C from the monitoring platform D is as follows:
http://c.bmonitor.com/a50231,b03753846,c523,0a_OS_,0c_IMEI_,0d_Andr oidID_,n_MAC_,f_IP_,r_TERM_

A domain name in the click monitoring URL of the monitoring platform D is http://c.bmonitor.com. The advertising task of the advertiser C is identified by a50231,b03753846,c523. The monitoring platform D requires that the following six macro parameters be reported: _OS_, _IMEI_, _AndroidID_, _MAC_, _IP_, and _TERM_. The underlined macros need to be replaced before reporting.

Step 2. The advertising platform 1 receives an advertisement push request, and creates an advertisement push task.

The advertisement push request may be sent by the advertiser by using a connected device. The advertisement push task may include an advertisement that the advertiser needs to push and the monitoring URL obtained from the monitoring platform 2.

Step 3. The advertising platform 1 receives an advertising request sent by the terminal 3.

Step 4. The advertising platform 1 sends an advertisement and the monitoring URL to the terminal 3.

Specifically, the advertising platform server 5 sends the advertisement and the monitoring URL to the terminal 3.

Step 5. When an advertising event occurs, the terminal 3 reports the advertising event to both the advertising platform 1 and the monitoring platform 2.

Specifically, the terminal 3 displays the advertisement to the user. Correspondingly, the user may view and click the advertisement by using the terminal 3. When the advertising event occurs, the terminal 3 replaces the dynamically replaceable macro parameter in the monitoring URL, and sends the monitoring URL to the advertising platform server 5, to report the advertising event to the advertising platform 1. In addition, after replacing the dynamically replaceable macro parameter in the monitoring URL, the terminal 3 reports the advertising event to the advertising monitoring server 8 by calling the monitoring URL.

In the prior-art advertising monitoring method, when the monitoring platform 2 or the monitoring URL changes, an error may occur when the terminal 3 replaces the macro parameter in the monitoring URL. Consequently, the advertising monitoring system cannot run properly. The prior-art advertising monitoring system cannot perform adjustment flexibly and has poor adaptability.

Advertising monitoring methods provided in the embodiments of this application are intended to resolve the prior-art technical problem that the prior-art advertising monitoring method has poor adaptability in an application scenario in which the monitoring platform or the monitoring URL changes. Changes of the monitoring URL may include an addition of a to-be-reported parameter, a change of an encryption manner used by a to-be-reported parameter, and the like. Changes of the monitoring platform may include an addition of a monitoring URL to the existing monitoring platform, an addition of a monitoring URL due to an addition of a monitoring platform, and the like.

The terminal in the embodiments of this application may be a wireless terminal such as a mobile phone or a tablet computer, or may be a handheld device with a wireless connection function, an in-vehicle device, a wearable device, a computing device, a TV box, and various forms of user equipments UEs, mobile stations (Mobile Station, MS), and terminals (terminal). On the terminal, a mobile application client having an advertising monitoring function or an advertising software development kit (Software Development Kit, SDK) integrated in an application may be installed. This is not limited in the embodiments of this application.

The advertising platform server in the embodiments of this application may be any device having functions of data processing and data transceiving. This is not limited in the embodiments of this application.

The following uses specific embodiments to describe in detail technical solutions of this application and how the foregoing technical problem is resolved by using the technical solutions of this application. The following several specific embodiments may be combined with each other, and a same or similar concept or process may not be described repeatedly in some embodiments.

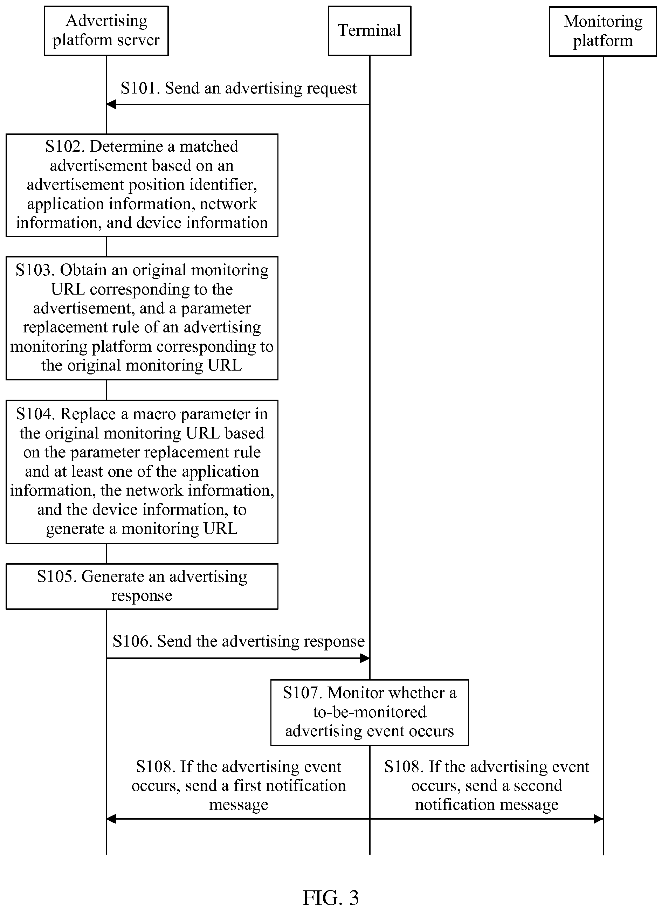

FIG. 3 is a message exchange diagram of an embodiment of an advertising monitoring method according to an embodiment of this application. The advertising monitoring method provided in this embodiment of this application is applicable to an application scenario in which a monitoring platform or a monitoring URL changes. The advertising monitoring method provided in this embodiment of this application is also applicable to an application scenario in which a monitoring platform or a monitoring URL does not change. FIG. 3 is used as an example to describe the advertising monitoring method provided in this embodiment of this application.

S101. A terminal sends an advertising request to an advertising platform server.

The advertising request includes an advertisement position identifier, application information, network information, and device information.

The advertisement position identifier can uniquely identify an advertisement position in a mobile application client. An advertisement position has an advertisement position width and an advertisement position height. The mobile application client is installed on the terminal, and the advertisement position width and the advertisement position height vary depending on a terminal screen size. For example, the advertisement position width may be 1080, and the advertisement position height may be 1620.

The application information may indicate related information of the mobile application client, for example, a version number of the application, a name of the application, and a package name of the application. For example, the name of the application may be "**game", the version number of the application may be 6.5.41.2, and the package name of the application may be com.**.openalliance.giftpackage.

The network information may indicate related information of a network environment in which the terminal is located, for example, a network type and a network operator type. The network type may be Ethernet, WiFi, mobile network, or the like.

The device information may indicate related information of the terminal.

Optionally, the device information may include at least one of the following: an international mobile equipment identity (International Mobile Equipment Identity, IMEI), an operating system identifier, a terminal model, an Internet Protocol (Internet Protocol, IP) address, and a media access control (Media Access Control, MAC) address.

The operating system identifier can uniquely identify an operating system.

It should be noted that a specific implementation of the advertising request is not particularly limited in this embodiment of this application, and message creation and message sending may be performed based on a communications protocol between the terminal and the advertising platform server. For example, the device information included in the advertising request may be an original value of the device information, may be an encrypted value obtained after encryption according to an encryption algorithm specified in the communications protocol, or the like. For example, the communications protocol may be the HTTPS protocol.

It should be noted that the advertising request in this embodiment of this application may be implemented by using an existing message between the terminal and the advertising platform server or may be implemented by using a new message. This is not particularly limited in this embodiment of this application.

It should be noted that a specific implementation of the operating system identifier is not particularly limited in this embodiment of this application. For example, the operating system identifier may include various types of operating system identifiers such as an Android operating system identifier and an iOS operating system identifier. An identifier of an operating system that the terminal runs is set to 1. For another example, different operating systems may be distinguished by setting identifiers of the operating systems to different values. For example, 0 indicates an Android operating system, 1 indicates an iOS operating system, 2 indicates a Windows Phone operating system, and 3 indicates another operating system.

S102. After receiving the advertising request sent by the terminal, the advertising platform server may determine a matched advertisement based on an advertisement position identifier, application information, network information, and device information.

Specifically, different terminals or mobile application clients are corresponding to different advertisements. For example, an advertisement on a specific type of mobile application client may not be pushed onto another type of mobile application client. For another example, different terminals may have different display screen sizes, and different screen sizes may be corresponding to different advertisement display resolutions. Therefore, the advertising platform server may determine, based on the information reported by the terminal, the advertisement matching the information.

It should be noted that, in this step, any existing algorithm may be used to determine the matched advertisement based on the advertisement position identifier, the application information, the network information, and the device information. This is not particularly limited in this embodiment of this application.

S103. The advertising platform server may obtain an original monitoring URL corresponding to the advertisement, and a parameter replacement rule of an advertising monitoring platform corresponding to the original monitoring URL.

The original monitoring URL is obtained by an advertiser from the advertising monitoring platform.

Specifically, an advertisement is pushed by an advertiser, and therefore each advertisement is corresponding to an advertiser. The original monitoring URL corresponding to the advertisement is the original monitoring URL obtained by the advertiser corresponding to the advertisement from the advertising monitoring platform. The original monitoring URL is corresponding to the advertisement pushed by the advertiser, the advertising monitoring platform, and a to-be-monitored advertising event.

Each advertising monitoring platform is corresponding to a parameter replacement rule. Different advertising monitoring platform may be corresponding to different parameter replacement rules. The parameter replacement rule may indicate whether the original monitoring URL needs to be replaced, which parameters need to be replaced in the original monitoring URL, and what manner is used to replace the parameters. The advertising platform server needs to obtain the parameter replacement rule of the advertising monitoring platform corresponding to the original monitoring URL.

Optionally, the parameter replacement rule may include a parameter name and a parameter encryption manner.

Optionally, the parameter replacement rule may further include a monitoring domain name.

It should be noted that the parameter encryption manner is not particularly limited in this embodiment of this application. The parameter encryption manner may be any existing encryption manner, and is set based on a need. For example, the encryption manner may be a message digest algorithm 5 (Message Digest Algorithm 5, MD5). The encryption manner may alternatively be no encryption.

S104. The advertising platform server may replace a macro parameter in the original monitoring URL based on the parameter replacement rule and at least one of the application information, the network information, and the device information, to generate a monitoring URL.

Specifically, whether the original monitoring URL needs to be replaced, which parameters need to be replaced in the original monitoring URL, and what manner is used to replace the parameters may be determined based on the parameter replacement rule; and then, the macro parameter in the original monitoring URL may be replaced based on at least one of the application information, the network information, and the device information, to generate the monitoring URL.

It can be learned that the original monitoring URL and the monitoring URL are different in this embodiment of this application. The original monitoring URL is obtained by the advertiser from the advertising monitoring platform, and a macro parameter in the original monitoring URL has never been replaced. For the monitoring URL, macro parameter replacement has been performed. Parameter replacement is performed by the advertising platform server. Specifically, the macro parameter in the original monitoring URL is replaced based on the application information, the network information, and the device information that are reported by the terminal and the parameter replacement rule of the advertising monitoring platform corresponding to the original monitoring URL.

Because the advertising platform server has replaced the macro parameter in the original monitoring URL, the terminal does not need to perform parameter replacement.

S105. The advertising platform server may generate an advertising response.

The advertising response may include the monitoring URL.

Optionally, the advertising response may further include an advertisement corresponding to the advertisement position identifier, the application information, the network information, and the device information.

Specifically, the advertising platform server may send the matched advertisement to the terminal by using the advertising response, improving advertisement push efficiency.

It should be noted that a specific implementation of the advertising response is not particularly limited in this embodiment of this application, and message creation and message sending may be performed based on the communications protocol between the terminal and the advertising platform server. The advertising response may be implemented by using an existing message between the terminal and the advertising platform server, or may be implemented by using a new message.

S106. The advertising platform server sends the advertising response to the terminal.

S107. The terminal monitors whether a to-be-monitored advertising event occurs.

S108. If detecting that the advertising event occurs, the terminal may send a first notification message to the advertisement service server, and send a second notification message to the advertising monitoring platform by calling the monitoring URL.

The first notification message is used to report the advertising event to the advertisement service server, and the second notification message is used to report the advertising event to the advertising monitoring platform.

Specifically, because the monitoring URL is obtained after the advertising platform server performs parameter replacement, the terminal does not need to perform parameter replacement. In this case, when the terminal detects that the to-be-monitored advertising event occurs, the terminal only needs to report the monitoring URL corresponding to the advertising event directly to the advertising monitoring platform, and the terminal may report the advertising event to the advertising monitoring platform simply by calling the monitoring URL.

It can be learned that, when the original monitoring URL changes, or when the original monitoring URL changes because of a change of the monitoring platform, the advertising platform server instead of the terminal performs parameter replacement, so that an error possibly caused by parameter replacement by the terminal is prevented, and an advertising monitoring system can run properly. Compared with the prior art, the advertising monitoring method provided in this embodiment of this application resolves a technical problem that a prior-art advertising monitoring method has poor adaptability in the application scenario in which the advertising monitoring platform or the monitoring URL changes. The advertising monitoring method provided in this embodiment of this application may be adapted to a scenario in which the advertising monitoring system changes, improving adaptability of the advertising monitoring system.

It should be noted that a specific implementation of the first notification message is not particularly limited in this embodiment of this application, and message creation and message sending are performed based on the communications protocol between the terminal and the advertising platform server.

It should be noted that a specific implementation of the second notification message is not particularly limited in this embodiment of this application, and message creation and message sending are performed based on a communications protocol between the terminal and the advertising monitoring platform.

Optionally, in S102, before the advertising platform server receives the advertising request sent by the terminal, the method provided in this embodiment of this application may further include:
obtaining, by the advertising platform server, a parameter replacement rule of each advertising monitoring platform; and
storing, by the advertising platform server, the parameter replacement rule of each advertising monitoring platform in a configuration file.

Specifically, when an advertising platform needs to cooperate with a new monitoring platform, the advertising platform may obtain a parameter replacement rule of the new monitoring platform in advance, and store the new parameter replacement rule in the configuration file. If the parameter that the current monitoring platform in cooperation requires to report changes, the advertising platform may also obtain a changed parameter replacement rule of the current monitoring platform in cooperation in advance, and store the changed parameter replacement rule in the configuration file. The encryption manner of the parameter that the monitoring platform requires to report may be implemented in advance in a program running on the advertising platform server.

It should be noted that one configuration file may be corresponding to one or more monitoring platforms. This is not particularly limited in this embodiment of this application.

It should be noted that the configuration file may be loaded into a memory of the advertising platform server in advance, to improve processing efficiency.

It should be noted that the obtaining, by the advertising platform server, a parameter replacement rule of each advertising monitoring platform may be triggered periodically or upon an event. This is not particularly limited in this embodiment of this application.

In the advertising monitoring method provided in this embodiment of this application, the advertising platform server replaces the macro parameter in the original monitoring URL based on the parameter replacement rule of the advertising monitoring platform and the information reported by the terminal, and the terminal does not need to perform parameter replacement. When the original monitoring URL changes, or when the original monitoring URL changes because of the change of the monitoring platform, the error possibly caused by parameter replacement by the terminal is prevented, and adaptability of the advertising monitoring system is improved.

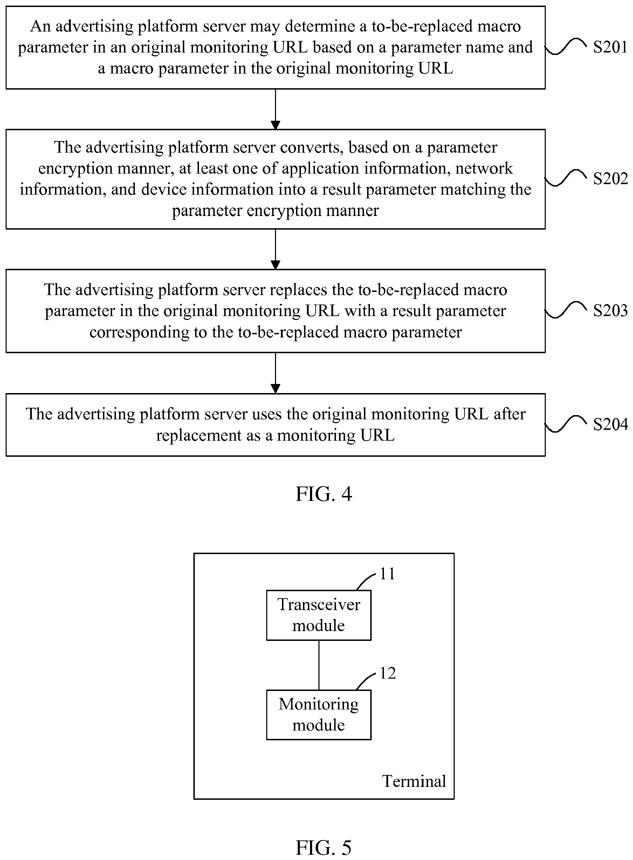

FIG. 4 is a flowchart of another embodiment of an advertising monitoring method according to an embodiment of this application. As shown in FIG. 4, in the another embodiment of the advertising monitoring method provided in this embodiment of this application, if the parameter replacement rule includes the parameter name and the parameter encryption manner, in the embodiment shown in FIG. 3, S104, that is, the advertising platform server replaces a macro parameter in the original monitoring URL based on the parameter replacement rule and at least one of the application information, the network information, and the device information, to generate a monitoring URL, may include the following steps:

S201. The advertising platform server may determine the to-be-replaced macro parameter in the original monitoring URL based on the parameter name and a macro parameter in the original monitoring URL.

S202. The advertising platform server converts, based on the parameter encryption manner, at least one of the application information, the network information, and the device information into a result parameter matching the parameter encryption manner.

S203. The advertising platform server replaces the to-be-replaced macro parameter in the original monitoring URL with a result parameter corresponding to the to-be-replaced macro parameter.

S204. The advertising platform server uses the original monitoring URL after replacement as the monitoring URL.

Optionally, if the parameter replacement rule further includes the monitoring domain name, before the determining the to-be-replaced macro parameter in the original monitoring URL based on the parameter name and a macro parameter in the original monitoring URL, the method may further include:
determining whether the monitoring domain name in the parameter replacement rule includes a monitoring domain name in the original monitoring URL.

If the monitoring domain name in the parameter replacement rule includes the monitoring domain name in the original monitoring URL, the step of determining the to-be-replaced macro parameter in the original monitoring URL is performed.

The following provides a detailed description by using a specific example.

It is assumed that monitoring domain names in parameter replacement rules are as follows:
an exposure monitoring domain name of a monitoring platform a is http://g.amonitor.com;
a click monitoring domain name of the monitoring platform a is http://e.amonitor.com;
an exposure monitoring domain name of a monitoring platform b is http://v.bmonitor.com; and
a click monitoring domain name of the monitoring platform b is http://c.bmonitor.com.

It is assumed that parameter names in the parameter replacement rules are as follows:
to-be-replaced macros in an exposure monitoring URL of the monitoring platform a are _OS_|_IP_|_MAC1_|_MAC_|_IMEI_;
to-be-replaced macros in a click monitoring URL of the monitoring platform a are _OS_|_IP_|_MAC1_|_MAC_|_IMEI_;
to-be-replaced macros in an exposure monitoring URL of the monitoring platform b are _OS_|_IP_|_MAC_|_IMEI_; and
to-be-replaced macros in a click monitoring URL of the monitoring platform b are _OS_|_IP_|_MAC_|_IMEI_.

It is assumed that parameter encryption manners in the parameter replacement rules are as follows:

It is assumed that the monitoring platform a requires that _OS_ be replaced with an unencrypted original value (0 indicates the Android operating system, 1 indicates the iOS operating system, 2 indicates the Windows Phone operating system, and 3 indicates another operating system), _IP_ be replaced with an MD5 digest of an IP address, _MAC1_ be replaced with an MD5 digest of an MAC address with separators ":", _MAC_ be replaced with an MD5 digest of the MAC address without the separators ":", and _IMEI_ be replaced with an MD5 digest of an IMEI.

It is assumed that the monitoring platform b requires that no parameter be encrypted and an original value be reported.

It is assumed that the device information reported by the terminal are original values: IMEI*, the Android operating system, IP*, and MAC*.

It is assumed that the determined original monitoring URL corresponding to the advertisement in S103 is the exposure event monitoring URL (hereinafter referred to as a URL* for short) obtained by the advertiser A from the monitoring platform a. Then:
Step a. The monitoring domain name in the URL* is http://g.amonitor.com, and it can be determined that the monitoring domain name in the parameter replacement rule includes the monitoring domain name in the URL*.
Step b. There are nine macro parameters in the URL*: _OS_, _IP_, _IMEI_, _AAID_, _MAC1_, _MAC_, _APP_, _ANDROIDID1_, and _ANDROIDID_, and there are five parameter names in the parameter replacement rule corresponding to the monitoring platform a: _OS_|_IP_|_MACl_|_MAC_|_IMEI_.
   It is determined that there are five to-be-replaced macro parameters in the URL*: _OS_|_IP_|_MAC 1_|_MAC_|_IMEI_.
Step c. Based on a parameter encryption manner, calculate an MD5 digest of IP*, calculate an MD5 digest of MAC* with separators ":", calculate an MD5 digest of MAC* without the separators ":", and calculate an MD5 digest of IMEI*.
Step d. Based on the encryption manner of the parameters that is required by the monitoring platform a, replace _OS_ with 0, replace _IP_ with the MD5 digest of IP*, replace _MAC1_ with the MD5 digest of MAC* with the separators ":", replace _MAC_ with the MD5 digest of MAC* without the separators ":", and replace _IMEI_ with the MD5 digest of IMEI*, to obtain the monitoring URL.

This embodiment of this application provides the advertising monitoring method, and specifically provides a specific implementation of replacing, by the advertising platform server, the macro parameter in the original monitoring URL based on the parameter replacement rule and at least one of the application information, the network information, and the device information, to generate the monitoring URL. The advertising monitoring method provided in this embodiment of this application can improve adaptability of the advertising monitoring system.

FIG. 5 is a schematic structural diagram of a terminal according to an embodiment of this application. The terminal provided in this embodiment of this application may be configured to implement the operations of the terminal in the foregoing advertising monitoring method embodiment.

The terminal may include a transceiver module 11 and a monitoring module 12.

The transceiver module 11 may send an advertising request to an advertising platform server, where the advertising request may include an advertisement position identifier, application information, network information, and device information.

The transceiver module 11 may further receive an advertising response returned by the advertising platform server.

The advertising response may include a monitoring URL; the monitoring URL may be generated after the advertising platform server replaces a macro parameter in an original monitoring URL based on a parameter replacement rule of an advertising monitoring platform and at least one of the application information, the network information, and the device information; and the original monitoring URL may be obtained by an advertiser from the advertising monitoring platform.

The monitoring module 12 may monitor whether a to-be-monitored advertising event occurs.

The transceiver module 11 may be further configured to: when the monitoring module 12 determines that the advertising event occurs, send a first notification message to the advertisement service server, and send a second notification message to the advertising monitoring platform by calling the monitoring URL.

The first notification message is used to report the advertising event to the advertisement service server, and the second notification message is used to report the advertising event to the advertising monitoring platform.

Optionally, the advertising response may further include an advertisement matching the advertisement position identifier, the application information, the network information, and the device information.

Optionally, the device information may include at least one of the following: an IMEI, an operating system identifier, a terminal model, an IP address, and a MAC address.

The terminal provided in this embodiment of this application is configured to perform the operations performed by the terminal in the method embodiment shown in FIG. 3. A technical principle and a technical effect of the terminal in this embodiment are similar to those of the terminal in the method embodiment shown in FIG. 3, and details are not repeated herein.

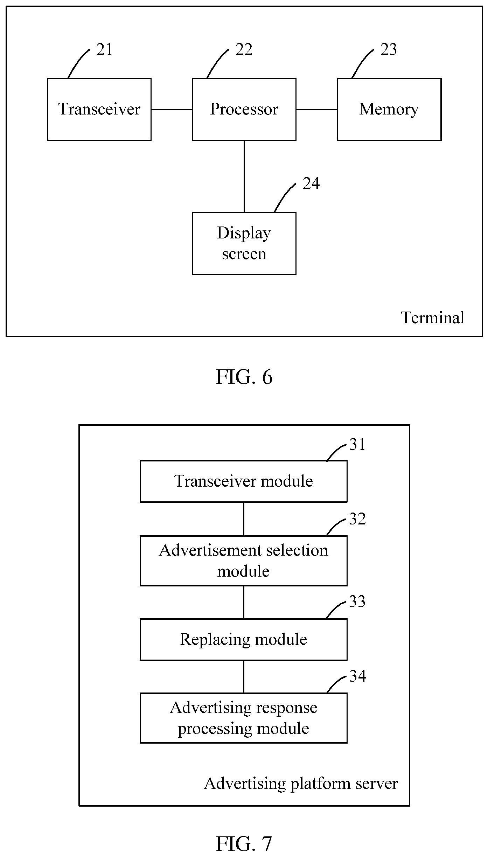

FIG. 6 is a schematic structural diagram of another structure of a terminal according to an embodiment of this application. The terminal provided in this embodiment of this application may be configured to implement the operations of the terminal in the foregoing advertising monitoring method embodiment.

For example, the terminal is a mobile phone. The terminal may include a transceiver 21, a processor 22, a memory 23, and a display screen 24.

Specific implementations of the transceiver 21, the processor 22, the memory 23, and the display screen 24 are not particularly limited in this embodiment of this application. For example, the transceiver 21 may be implemented by using a radio frequency (Radio Frequency, RF) circuit. The RF circuit may be configured to receive and send signals in an information receiving and sending process. The RF circuit may include but is not limited to an antenna, at least one amplifier, a transceiver, a coupler, a low noise amplifier (Low Noise Amplifier, LNA), a duplexer, and the like. The memory 23 may include a high-speed random access memory, and may further include a non-volatile memory such as at least one disk storage device, a flash memory device, or another volatile solid-state storage device. The memory 23 may be configured to store data, a software program, and a module. The processor 22 is a control center of the terminal, and runs the software program and the module stored in the memory 23 to implement various function applications of the terminal and process data. The display screen 24 may be configured to display information entered by a user, information provided for the user, and various menus of the terminal. The display screen 24 may include a touch panel. After detecting a touch operation on or near the touch panel, the touch panel sends a signal to the processor 22.

The transceiver 21 may send an advertising request to an advertising platform server, where the advertising request may include an advertisement position identifier, application information, network information, and device information.

The transceiver 21 may further receive an advertising response returned by the advertising platform server.

The advertising response may include a monitoring URL; the monitoring URL may be generated after the advertising platform server replaces a macro parameter in an original monitoring URL based on a parameter replacement rule of an advertising monitoring platform and at least one of the application information, the network information, and the device information; and the original monitoring URL may be obtained by an advertiser from the advertising monitoring platform.

The processor 22 may monitor whether a to-be-monitored advertising event occurs.

The transceiver 21 may be further configured to: when the processor 22 determines that the advertising event occurs, send a first notification message to the advertisement service server, and send a second notification message to the advertising monitoring platform by calling the monitoring URL.

The first notification message is used to report the advertising event to the advertisement service server, and the second notification message is used to report the advertising event to the advertising monitoring platform.

Optionally, the advertising response may further include an advertisement matching the advertisement position identifier, the application information, the network information, and the device information.

Optionally, the device information may include at least one of the following: an IMEI, an operating system identifier, a terminal model, an IP address, and a MAC address.

The terminal provided in this embodiment of this application is configured to perform the operations performed by the terminal in the method embodiment shown in FIG. 3. A technical principle and a technical effect of the terminal in this embodiment are similar to those of the terminal in the method embodiment shown in FIG. 3, and details are not repeated herein.

FIG. 7 is a schematic structural diagram of an advertising platform server according to an embodiment of this application. The advertising platform server provided in this embodiment of this application may be configured to implement the operations of the advertising platform server in the foregoing advertising monitoring methods.

The advertising platform server may include a transceiver module 31, an advertisement selection module 32, a replacing module 33, and an advertising response processing module 34.

The transceiver module 31 may receive an advertising request sent by a terminal, where the advertising request may include an advertisement position identifier, application information, network information, and device information.

The advertisement selection module 32 may determine a matched advertisement based on the advertisement position identifier, the application information, the network information, and the device information.

The replacing module 33 may obtain an original monitoring URL corresponding to the advertisement, and a parameter replacement rule of an advertising monitoring platform corresponding to the original monitoring URL, where the original monitoring URL is obtained by an advertiser from the advertising monitoring platform.

The replacing module 33 may further replace a macro parameter in the original monitoring URL based on the parameter replacement rule and at least one of the application information, the network information, and the device information, to generate a monitoring URL.

The advertising response processing module 34 may generate an advertising response.

The advertising response may include the monitoring URL.

The transceiver module 31 may further send the advertising response to the terminal.

Optionally, the parameter replacement rule may include a parameter name and a parameter encryption manner, and the replacing module 33 is specifically configured to:
determine the to-be-replaced macro parameter in the original monitoring URL based on the parameter name and a macro parameter in the original monitoring URL;
convert, based on the parameter encryption manner, at least one of the application information, the network information, and the device information into a result parameter matching the parameter encryption manner;
replace the to-be-replaced macro parameter in the original monitoring URL with a result parameter corresponding to the to-be-replaced macro parameter; and
use the original monitoring URL after replacement as the monitoring URL.

Optionally, the parameter replacement rule may further include a monitoring domain name, and the replacing module 33 may be further configured to:
determine whether the monitoring domain name in the parameter replacement rule includes a monitoring domain name in the original monitoring URL.

Optionally, the advertising response may further include an advertisement matching the advertisement position identifier, the application information, the network information, and the device information.

Optionally, the transceiver module 31 may be further configured to:
receive a first notification message sent by the terminal.

The first notification message is used by the terminal to report an advertising event.

Optionally, the device information may include at least one of the following: an IMEI, an operating system identifier, a terminal model, an IP address, and a MAC address.

Optionally, the replacing module 33 may be further configured to:
obtain a parameter replacement rule of each advertising monitoring platform; and
store the parameter replacement rule of each advertising monitoring platform in a configuration file.

The advertising platform server provided in this embodiment is configured to perform the operations performed by the advertising platform server in the method embodiments shown in FIG. 3 and FIG. 4. A technical principle and a technical effect of the advertising platform server in this embodiment are similar to those of the advertising platform server in the method embodiments shown in FIG. 3 and FIG. 4, and details are not repeated herein.

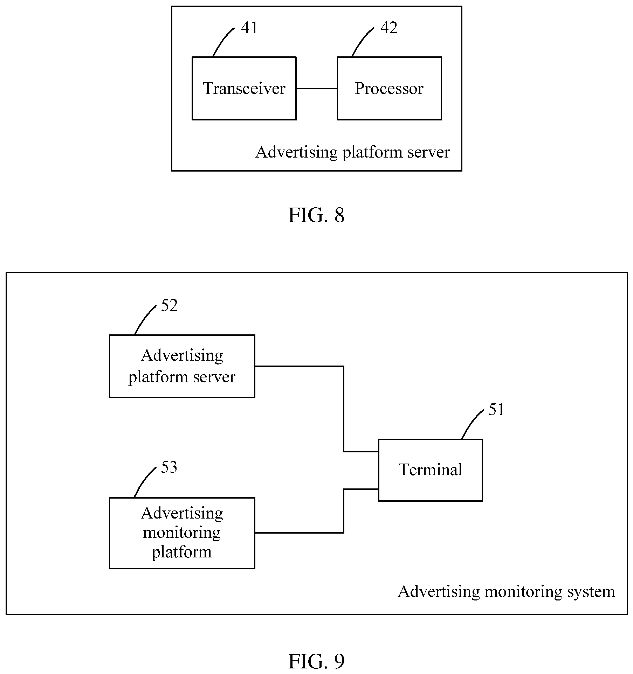

FIG. 8 is a schematic structural diagram of another structure of an advertising platform server according to an embodiment of this application. The advertising platform server provided in this embodiment of this application may be configured to implement the operations of the advertising platform server in the foregoing advertising monitoring methods.

The advertising platform server may include a transceiver 41 and a processor 42.

The transceiver 41 may receive an advertising request sent by a terminal, where the advertising request may include an advertisement position identifier, application information, network information, and device information.

The processor 42 may determine a matched advertisement based on the advertisement position identifier, the application information, the network information, and the device information.

The processor 42 may further obtain an original monitoring uniform resource locator URL corresponding to the advertisement, and a parameter replacement rule of an advertising monitoring platform corresponding to the original monitoring URL, where the original monitoring URL is obtained by an advertiser from the advertising monitoring platform.

The processor 42 may further replace a macro parameter in the original monitoring URL based on the parameter replacement rule and at least one of the application information, the network information, and the device information, to generate a monitoring URL.

The processor 42 may further generate an advertising response.

The advertising response may include the monitoring URL.

The transceiver 41 may further send the advertising response to the terminal.

Optionally, the parameter replacement rule may include a parameter name and a parameter encryption manner, and the processor 42 is specifically configured to:
determine the to-be-replaced macro parameter in the original monitoring URL based on the parameter name and a macro parameter in the original monitoring URL;
convert, based on the parameter encryption manner, at least one of the application information, the network information, and the device information into a result parameter matching the parameter encryption manner;
replace the to-be-replaced macro parameter in the original monitoring URL with a result parameter corresponding to the to-be-replaced macro parameter; and
use the original monitoring URL after replacement as the monitoring URL.

Optionally, the parameter replacement rule may further include a monitoring domain name, and the processor 42 may be further configured to:
determine whether the monitoring domain name in the parameter replacement rule includes a monitoring domain name in the original monitoring URL.

Optionally, the advertising response may further include an advertisement matching the advertisement position identifier, the application information, the network information, and the device information.

Optionally, the transceiver 41 may be further configured to:
receive a first notification message sent by the terminal.

The first notification message is used by the terminal to report an advertising event.

Optionally, the device information may include at least one of the following: an IMEI, an operating system identifier, a terminal model, an IP address, and a MAC address.

Optionally, the processor 42 may be further configured to:
obtain a parameter replacement rule of each advertising monitoring platform; and
store the parameter replacement rule of each advertising monitoring platform in a configuration file.

The advertising platform server provided in this embodiment is configured to perform the operations performed by the advertising platform server in the method embodiments shown in FIG. 3 and FIG. 4. A technical principle and a technical effect of the advertising platform server in this embodiment are similar to those of the advertising platform server in the method embodiments shown in FIG. 3 and FIG. 4, and details are not repeated herein.

FIG. 9 is a schematic structural diagram of an advertising monitoring system according to an embodiment of this application. As shown in FIG. 9, the advertising monitoring system provided in this embodiment of this application may include a terminal 51, an advertising platform server 52, and an advertising monitoring platform 53. The terminal 51 may be the terminal provided in the embodiment shown in FIG. 5, and the advertising platform server 52 may be the advertising platform server provided in the embodiment shown in FIG. 7. Alternatively, the terminal 51 may be the terminal provided in the embodiment shown in FIG. 6, and the advertising platform server 52 may be the advertising platform server provided in the embodiment shown in FIG. 8. The advertising monitoring system provided in this embodiment of this application may be configured to implement the foregoing advertising monitoring methods.

A quantity of the terminals 51, a quantity of the advertising platform servers 52, and a quantity of the advertising monitoring platforms 53 are not limited in this embodiment of this application. Optionally, if there are a plurality of terminals 51, each terminal 51 may exchange advertisement messages with the advertising platform server 52 and the advertising monitoring platform 53.

A network architecture of and a device included in the advertising monitoring platform are not particularly limited in this embodiment of this application. The advertising monitoring platform may be any existing advertising monitoring platform.

In the advertising monitoring system provided in this embodiment of this application, the included terminal is configured to perform the operations performed by the terminal in the method embodiment shown in FIG. 3, and the included advertising platform server is configured to perform the operations performed by the advertising platform server in the method embodiments shown in FIG. 3 and FIG. 4. Implementation principles and technical effects of the terminal and the advertising platform server in this embodiment are similar to those of the terminal and the advertising platform server in the method embodiments shown in FIG. 3 and FIG. 4, and details are not repeated herein.

A person skilled in the art may be further aware that units and algorithm steps in examples described with reference to the embodiments disclosed in this specification can be implemented by electronic hardware, computer software, or a combination thereof. To clearly describe the interchangeability between the hardware and the software, the foregoing has generally described compositions and steps of each example based on functions. Whether the functions are performed by the hardware or the software depends on particular applications and design constraints of the technical solutions. A person skilled in the art may use different methods to implement the described functions for each particular application, but it should not be considered that the implementation goes beyond the scope of this application.

A person of ordinary skill in the art may understand that all or some of the steps in each of the foregoing methods in the embodiments may be implemented by a program instructing a processor. The foregoing program may be stored in a computer readable storage medium. The storage medium may be a non-transitory (English: non-transitory) medium such as a random-access memory, a read-only memory, a flash memory, a hard disk, a solid state drive, a magnetic tape (English: magnetic tape), a floppy disk (English: floppy disk), an optical disc (English: optical disc), or any combination thereof.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An advertising monitoring method, comprising:
sending an advertising request to an advertising platform server, wherein the advertising request comprises an advertisement position identifier, application information, network information, and device information;
receiving an advertising response returned by the advertising platform server, wherein the advertising response comprises a monitoring uniform resource locator URL, the monitoring URL is generated after the advertising platform server replaces a macro parameter in an original monitoring URL based on a parameter replacement rule of an advertising monitoring platform and at least one of the application information, the network information, and the device information, and the original monitoring URL is obtained by an advertiser from the advertising monitoring platform;
monitoring whether a to-be-monitored advertising event occurs; and
if the advertising event occurs, sending a first notification message to the advertisement service server, and sending a second notification message to the advertising monitoring platform by calling the monitoring URL, wherein the first notification message is used to report the advertising event to the advertisement service server, and the second notification message is used to report the advertising event to the advertising monitoring platform.

2. The method according to claim 1, wherein the advertising response further comprises an advertisement matching the advertisement position identifier, the application information, the network information, and the device information.

3. The method according to claim 1 or 2, wherein the device information comprises at least one of the following: an international mobile equipment identity IMEI, an operating system identifier, a terminal model, an Internet Protocol IP address, and a media access control MAC address.

4. An advertising monitoring method, comprising:
receiving an advertising request sent by a terminal, wherein the advertising request comprises an advertisement position identifier, application information, network information, and device information;
determining a matched advertisement based on the advertisement position identifier, the application information, the network information, and the device information;
obtaining an original monitoring uniform resource locator URL corresponding to the advertisement, and a parameter replacement rule of an advertising monitoring platform corresponding to the original monitoring URL, wherein the original monitoring URL is obtained by an advertiser from the advertising monitoring platform;
replacing a macro parameter in the original monitoring URL based on the parameter replacement rule and at least one of the application information, the network information, and the device information, to generate a monitoring URL;
generating an advertising response, wherein the advertising response comprises the monitoring URL; and
sending the advertising response to the terminal.

5. The method according to claim 4, wherein the parameter replacement rule comprises a parameter name and a parameter encryption manner, and the replacing a macro parameter in the original monitoring URL based on the parameter replacement rule and the device information, to generate a monitoring URL comprises:
determining the to-be-replaced macro parameter in the original monitoring URL based on the parameter name and a macro parameter in the original monitoring URL;
converting, based on the parameter encryption manner, at least one of the application information, the network information, and the device information into a result parameter matching the parameter encryption manner;
replacing the to-be-replaced macro parameter in the original monitoring URL with a result parameter corresponding to the to-be-replaced macro parameter; and
using the original monitoring URL after replacement as the monitoring URL.

6. The method according to claim 5, wherein the parameter replacement rule further comprises a monitoring domain name; and before the determining the to-be-replaced macro parameter in the original monitoring URL based on the parameter name and a macro parameter in the original monitoring URL, the method further comprises:
determining whether the monitoring domain name in the parameter replacement rule comprises a monitoring domain name in the original monitoring URL.

7. The method according to claim 4, wherein the advertising response further comprises the advertisement.

8. The method according to claim 4, wherein the method further comprises:
receiving a first notification message sent by the terminal, wherein the first notification message is used by the terminal to report an advertising event.

9. The method according to any one of claims 4 to 8, wherein the device information comprises at least one of the following: an international mobile equipment identity IMEI, an operating system identifier, a terminal model, an Internet Protocol IP address, and a media access control MAC address.

10. The method according to any one of claims 4 to 8, wherein before the receiving an advertising request sent by a terminal, the method further comprises:
obtaining a parameter replacement rule of each advertising monitoring platform; and
storing the parameter replacement rule of each advertising monitoring platform in a configuration file.

11. A terminal, comprising:
a transceiver module, configured to: send an advertising request to an advertising platform server, wherein the advertising request comprises an advertisement position identifier, application information, network information, and device information; and receive an advertising response returned by the advertising platform server, wherein the advertising response comprises a monitoring uniform resource locator URL, the monitoring URL is generated after the advertising platform server replaces a macro parameter in an original monitoring URL based on a parameter replacement rule of an advertising monitoring platform and at least one of the application information, the network information, and the device information, and the original monitoring URL is obtained by an advertiser from the advertising monitoring platform; and
a monitoring module, configured to monitor whether a to-be-monitored advertising event occurs, wherein
the transceiver module is further configured to: when the monitoring module determines that the advertising event occurs, send a first notification message to the advertisement service server, and send a second notification message to the advertising monitoring platform by calling the monitoring URL, wherein the first notification message is used to report the advertising event to the advertisement service server, and the second notification message is used to report the advertising event to the advertising monitoring platform.

12. The terminal according to claim 11, wherein the advertising response further comprises an advertisement matching the advertisement position identifier, the application information, the network information, and the device information.

13. The terminal according to claim 11 or 12, wherein the device information comprises at least one of the following: an international mobile equipment identity IMEI, an operating system identifier, a terminal model, an Internet Protocol IP address, and a media access control MAC address.

14. An advertising platform server, comprising:
a transceiver module, configured to receive an advertising request sent by a terminal, wherein the advertising request comprises an advertisement position identifier, application information, network information, and device information;
an advertisement selection module, configured to determine a matched advertisement based on the advertisement position identifier, the application information, the network information, and the device information;
a replacing module, configured to: obtain an original monitoring uniform resource locator URL corresponding to the advertisement, and a parameter replacement rule of an advertising monitoring platform corresponding to the original monitoring URL, wherein the original monitoring URL is obtained by an advertiser from the advertising monitoring platform; and replace a macro parameter in the original monitoring URL based on the parameter replacement rule and at least one of the application information, the network information, and the device information, to generate a monitoring URL; and
an advertising response processing module, configured to generate an advertising response, wherein the advertising response comprises the monitoring URL, wherein
the transceiver module is further configured to send the advertising response to the terminal.

15. The advertising platform server according to claim 14, wherein the parameter replacement rule comprises a parameter name and a parameter encryption manner, and the replacing module is specifically configured to:
determine the to-be-replaced macro parameter in the original monitoring URL based on the parameter name and a macro parameter in the original monitoring URL;
convert, based on the parameter encryption manner, at least one of the application information, the network information, and the device information into a result parameter matching the parameter encryption manner;
replace the to-be-replaced macro parameter in the original monitoring URL with a result parameter corresponding to the to-be-replaced macro parameter; and
use the original monitoring URL after replacement as the monitoring URL.

16. The advertising platform server according to claim 15, wherein the parameter replacement rule further comprises a monitoring domain name, and the replacing module is further configured to:
determine whether the monitoring domain name in the parameter replacement rule comprises a monitoring domain name in the original monitoring URL.

17. The advertising platform server according to claim 14, wherein the advertising response further comprises the advertisement.

18. The advertising platform server according to claim 14, wherein the transceiver module is further configured to:
receive a first notification message sent by the terminal, wherein the first notification message is used by the terminal to report an advertising event.

19. The advertising platform server according to any one of claims 14 to 18, wherein the device information comprises at least one of the following: an international mobile equipment identity IMEI, an operating system identifier, a terminal model, an Internet Protocol IP address, and a media access control MAC address.

20. The advertising platform server according to any one of claims 14 to 18, wherein the replacing module is further configured to:
obtain a parameter replacement rule of each advertising monitoring platform; and
store the parameter replacement rule of each advertising monitoring platform in a configuration file.

21. A terminal, comprising:
a transceiver, configured to: send an advertising request to an advertising platform server, wherein the advertising request comprises an advertisement position identifier, application information, network information, and device information; and receive an advertising response returned by the advertising platform server, wherein the advertising response comprises a monitoring uniform resource locator URL, the monitoring URL is generated after the advertising platform server replaces a macro parameter in an original monitoring URL based on a parameter replacement rule of an advertising monitoring platform and at least one of the application information, the network information, and the device information, and the original monitoring URL is obtained by an advertiser from the advertising monitoring platform;
a processor, configured to monitor whether a to-be-monitored advertising event occurs, wherein
the transceiver is further configured to: when the processor determines that the advertising event occurs, send a first notification message to the advertisement service server, and send a second notification message to the advertising monitoring platform by calling the monitoring URL, wherein the first notification message is used to report the advertising event to the advertisement service server, and the second notification message is used to report the advertising event to the advertising monitoring platform.

22. The terminal according to claim 21, wherein the advertising response further comprises an advertisement matching the advertisement position identifier, the application information, the network information, and the device information.

23. The terminal according to claim 21 or 22, wherein the device information comprises at least one of the following: an international mobile equipment identity IMEI, an operating system identifier, a terminal model, an Internet Protocol IP address, and a media access control MAC address.

24. An advertising platform server, comprising:
a transceiver, configured to receive an advertising request sent by a terminal, wherein the advertising request comprises an advertisement position identifier, application information, network information, and device information; and
a processor, configured to: determine a matched advertisement based on the advertisement position identifier, the application information, the network information, and the device information; obtain an original monitoring uniform resource locator URL corresponding to the advertisement, and a parameter replacement rule of an advertising monitoring platform corresponding to the original monitoring URL, wherein the original monitoring URL is obtained by an advertiser from the advertising monitoring platform; replace a macro parameter in the original monitoring URL based on the parameter replacement rule and at least one of the application information, the network information, and the device information, to generate a monitoring URL; and generate an advertising response, wherein the advertising response comprises the monitoring URL, wherein
the transceiver is further configured to send the advertising response to the terminal.

25. The advertising platform server according to claim 24, wherein the parameter replacement rule comprises a parameter name and a parameter encryption manner, and the processor is specifically configured to:
determine the to-be-replaced macro parameter in the original monitoring URL based on the parameter name and a macro parameter in the original monitoring URL;
convert, based on the parameter encryption manner, at least one of the application information, the network information, and the device information into a result parameter matching the parameter encryption manner;
replace the to-be-replaced macro parameter in the original monitoring URL with a result parameter corresponding to the to-be-replaced macro parameter; and
use the original monitoring URL after replacement as the monitoring URL.

26. The advertising platform server according to claim 25, wherein the parameter replacement rule further comprises a monitoring domain name, and the processor is further configured to:
determine whether the monitoring domain name in the parameter replacement rule comprises a monitoring domain name in the original monitoring URL.

27. The advertising platform server according to claim 24, wherein the advertising response further comprises the advertisement.

28. The advertising platform server according to claim 24, wherein the transceiver is further configured to:
receive a first notification message sent by the terminal, wherein the first notification message is used by the terminal to report an advertising event.

29. The advertising platform server according to any one of claims 24 to 28, wherein the device information comprises at least one of the following: an international mobile equipment identity IMEI, an operating system identifier, a terminal model, an Internet Protocol IP address, and a media access control MAC address.

30. The advertising platform server according to any one of claims 24 to 28, wherein the processor is further configured to:
obtain a parameter replacement rule of each advertising monitoring platform; and
store the parameter replacement rule of each advertising monitoring platform in a configuration file.

31. An advertising monitoring system, comprising an advertising monitoring platform, the terminal according to any one of claims 11 to 13, and the advertising platform server according to any one of claims 14 to 20.

32. An advertising monitoring system, comprising an advertising monitoring platform, the terminal according to any one of claims 21 to 23, and the advertising platform server according to any one of claims 24 to 30.
